# EUROPÄISCHE PATENTSCHRIFT

(11) **EP 4 344 949 B1**
(45) Veröffentlichungstag und Bekanntmachung des Hinweises auf die Patenterteilung: **23.10.2024**
(21) Anmeldenummer: 23197622.6
(22) Anmeldetag: 15.09.2023
(51) Int. Cl.: B60Q 1/00, B60R 13/00, B60R 19/50, F21S 43/14, F21S 43/239, F21S 43/245, F21S 43/249, F21S 43/20, F21W 104/00, G02B 5/02, F21V 8/00, B60R 13/04

(54) **BELEUCHTUNGSSYSTEM FÜR EIN AUSSENVERKLEIDUNGSTEIL EINES KRAFTFAHRZEUGS**
LIGHTING SYSTEM FOR AN EXTERIOR TRIM PART OF A MOTOR VEHICLE
SYSTÈME D'ÉCLAIRAGE POUR UN ÉLÉMENT D'HABILLAGE EXTÉRIEUR D'UN VÉHICULE AUTOMOBILE

(30) Priorität: 28.09.2022 DE 102022210250
(43) Veröffentlichungstag der Anmeldung: 03.04.2024
(73) Patentinhaber: Magna Exteriors GmbH, 63877 Sailauf (DE)
(72) Erfinder: GÖTZELMANN, Johannes, 97237 Altertheim (DE); MÜNKER, Klaus, 83556 Griesstätt (DE); WURSTER, Michael, 73732 Esslingen (DE); WEYER, Tobias, 50735 Köln (DE)
(74) Vertreter: Reuter, Silke Beatrix

(56) Entgegenhaltungen:
- EP-A1- 3 376 098
- WO-A1-2005/025275
- WO-A1-2019/223989
- WO-A1-2022/172783
- CN-A- 109 611 788
- DE-A1- 102018 009 248
- FR-A1- 3 128 770
- JP-A- 2019 169 241
- US-A1- 2002 043 012
- US-A1- 2008 066 355

## Beschreibung

Die Erfindung betrifft ein Beleuchtungssystem für ein Außenverkleidungsteil eines Kraftfahrzeugs, wobei das Außenverkleidungsteil insbesondere ein Frontmodul ist.

### Stand der Technik

Durch die zunehmende Verbreitung von elektrischen Fahrzeugen ändern sich die Anforderungen an Frontpanele, da keine Kühlereintrittsöffnungen in demselben Maß wie für konventionelle Kraftfahrzeuge mit Verbrennungsmotoren gefordert sind.

Frontpanele in elektrischen Fahrzeugen bekommen mehr und mehr geschlossene Kühlerverkleidungen, was eine bessere Aerodynamik des Fahrzeugs bei gleichzeitig weniger Kühlluftbedarf entspricht.

Frontpanele können aus transparentem Polycarbonat gefertigt und mit geeigneten Dekorationselementen oder auch Funktionselementen, wie beispielsweise Beleuchtungsmodulen versehen werden. Hierfür werden die Frontpanele gemäß dem Stand der Technik in einem Zweikomponenten Spritzgussverfahren hergestellt. Die Rückseite, also die Fahrzeuginnenseite des dreidimensional geformten Frontpanels, wird anschließend lackiert, wobei die Vorderseite, also die Außenseite des Fahrzeugs, vor Lacknebel geschützt werden muss. Dazu wird die Vorderseite maskiert. Zur Herstellung von mehrfarbigen Strukturen werden eingeprägte Geometrien des Frontpanel mit einem Laser freigelegt. Anschließend erfolgt eine Beschichtung der Innenseite mit einem physikalischen Gasabscheideverfahren (PVD), um einen Chromeffekt bei gleichzeitiger Lichttransparenz zu bekommen. Die Vorderseite erhält eine Hartlackbeschichtung.

Des Weiteren ist es bekannt in die Frontpanele separate Bauteile in Form von Designelementen wie beispielsweise Markensymbole zu integrieren. Die Bauteile können mit Chromfolie dekoriert und anschließend in entsprechende Ausnehmungen des in der Farbgestaltung des Lacks des Kraftfahrzeugs lackierten Kunststoffformteile eingesetzt werden.

Diese dekorierten Bauteile wie beispielsweise Markensymbole können durch den Einsatz von lichtdurchlässigen Werkstoffen von der Rückseite beleuchtet werden und bilden damit eine dekorative Beleuchtungsfunktion. Derartig bekannte Verkleidungselemente mit integrierten Leuchtfunktionen haben allerdings den Nachteil, dass die Beleuchtung auch im unbeleuchteten Zustand für einen Nutzer sichtbar ist und nur dekorativ ist, und keine Funktionsbeleuchtung darstellt.

Aus der WO 2019/223 989 A1 ist ein hinterleuchtbares Zierelement mit einem schichtartigen Aufbau, umfassend ein Dekorelement, einen Lichtleiter, eine Lichtquelle und eine Spiegelschicht, bekannt. Das hinterleuchtbare Zierelement hat eine Sichtseite, die als schichtartige Struktur ausgebildet ist. Auf einer Rückseite eines Dekorteils ist eine Lichtleiteinheit in Form eines Lichtleitkörpers angeordnet. Die Lichtleitkörper ist gemäß einer Ausführungsform mit einer lokalen Designstruktur zur lokalen Beeinflussung des Lichts von einer Lichtquelle auf die Sichtseite ausgebildet. Die lokale Designstruktur ist dabei in einer Ausführungsform der Offenbarung als lokale Materialveränderung im Inneren des Lichtleiters ausgebildet, die mittels eines Lasers hergestellt ist. Um das von der Lichtquelle in den Lichtleitkörper eingekoppelte Licht entlang einer Richtung der sichtbaren Seite zu reflektieren, und um einen Tiefeneffekt für einen Betrachter zu erzeugen, ist zumindest auf der Rückseite des Lichtleitkörpers eine reflektierende Spiegelschicht angeordnet.

Das Dokument DE 10 2018 211 457 A1 zeigt ein Verfahren zur Herstellung eines hinterleuchtbaren Exterieur-Bauteils, wobei zunächst ein Basisteil aus einem transparenten Kunststoff hergestellt wird, welches in einem weiteren Schritt auf der Innenfläche mit einem lichtundurchlässigen Material beschichtet wird. Zur Ausbildung von lichtdurchlässigen Strukturen wird das lichtdurchlässige Material durch Laserabtrag in den entsprechenden gewünschten strukturierten Bereichen entfernt.

Es ist Aufgabe der Erfindung, ein Beleuchtungssystem für ein Außenverkleidungsteil mit einer farbig gestalteten Sichtseite, wobei die Farbe vorzugsweise die Wagenfarbe ist, für ein Kraftfahrzeug bereitzustellen, welches zumindest in einem ersten Zustand für einen Nutzer von der Außenseite des Kraftfahrzeugs gesehen eine optisch einheitliche Gestaltung vermittelt, und ein dreidimensionales charakteristisches Merkmal nicht sichtbar ist und in einem zweiten Zustand ein dreidimensionales charakteristisches Merkmal von der Außenseite gesehen sichtbar ist, und die Sichtseite weiterhin als eine durchgehende einheitlich farbig gestaltete Oberfläche wahrnehmbar ist.

Die Aufgabe wird durch ein Beleuchtungssystem für ein Außenverkleidungsteil mit den Merkmalen des Anspruch 1 gelöst.

Durch das erfindungsgemäße Beleuchtungssystem eines Außenverkleidungsteils ist es möglich einen Gestaltungsbereich mit zumindest einem dreidimensional erscheinenden charakteristischen Merkmal mit einer "Verschwindefunktion" (secret until lit) zu realisieren. Dies bedeutet, dass in einem ersten Zustand für einen Nutzer dieses charakteristische Merkmal nicht sichtbar ist und der Nutzer den Eindruck eines einheitlich farbig gestalteten Außenverkleidungsteils hat. In einem zweiten Zustand ist das dreidimensional erscheinende charakteristische Merkmal für eine Nutzer von der Außenseite her sichtbar. In diesem zweiten Zustand nimmt der Nutzer auf der Sichtseite den Gestaltungsbereich mit dem dreidimensional erscheinenden charakteristischen Merkmal des Fahrzeugherstellers und/oder dekorative und/oder informative Elemente wie zumindest einem Symbol, einem Zeichen, einem Bild, einem Markensymbol und als Hintergrund weiterhin die farbgebende Beschichtung wahr.

Dieses einheitliche Erscheinungsbild der Sichtseite, d.h. die farbgebende Beschichtung, kann durch eine Lackierung oder eine Lackfolie hergestellt sein. Die farbgebende Beschichtung ist lichtundurchlässig.

Durch das erfindungsgemäße Beleuchtungssystem ist es möglich dem Nutzer eines Kraftfahrzeugs und/oder einem Verkehrsteilnehmer unterschiedliche beleuchtete Merkmale zumindest zeitweise zur Verfügung zu stellen. Diese Merkmale können sowohl sicherheitsrelevante Aspekte als auch Kommunikationsmöglichkeiten durch beleuchtete Symbole, Schriftzüge beinhalten. Die Merkmale können auch Designmerkmale beinhalten. Hierdurch wird eine Erweiterung der Funktionsmöglichkeiten bei beleuchteten Frontpanels erreicht. Als weitere integrierbare Funktion ist beispielsweise die Blinkerfunktion vorstellbar.

Erfindungsgemäß ist der Gestaltungsbereich die einheitlich die Vorderseite bildende Abdeckschicht bzw. das Abdeckelement des Außenverkleidungselements, die als transparentes Kunststoffformteil das Lichtfenster und den Gestaltungsbereich in Form des zumindest einen Lichtfensters umfasst oder überdeckt, so dass keinerlei Fugen im Oberflächenbereich des Beleuchtungssystems in der verbauten Situation am Verkleidungsteil entstehen. Hierdurch werden insbesondere Abdichtprobleme bei der Integration der beleuchteten Merkmale vermieden.

Die farbgebende Beschichtung des lichtundurchlässigen Bereichs des Abdeckelements ist dabei erfindungsgemäß die gleiche Farbe wie die farbgebende Beschichtung des Gehäuseelements, wobei diese Farbe vorzugsweise der Wagenfarbe des Kraftfahrzeugs entspricht.

Als Außenseite oder auch Sichtseite wird der von der Außenumgebung her für einen Nutzer sichtbarer Oberflächenbereich gesehen. Die Innenseite ist dementsprechend die der Außenseite gegenüberliegende zur Innenseite weisende Seite.

Als durchleuchtbares Verkleidungsteil wird insbesondere ein Außenverkleidungsteil wie beispielsweise ein Frontpanel, eine Stoßfängerverkleidung, eine Heckklappenverkleidung, eine Türverkleidung, eine Dachverkleidung oder ein Spoiler angesehen oder ist ein Bauteil eines der vorgenannten Teile.

Das Außenverkleidungsteil ist dreidimensional ausgestaltet.

Die Beleuchtungsfunktion wird durch zumindest eine Lichtquelle hergestellt. Als Lichtquelle kann eine oder können mehrere LEDs dienen. Die Lichtquelle bzw. die Lichtquellen sind jeweils hinter der bestimmungsgemäßen Sichtseite im Bereich des lichtundurchlässigen Abschnitts des Abdeckelements bzw. der Abdeckschicht angeordnet.

Die zumindest eine Lichtquelle ist dabei derart angeordnet, dass sie ihr Licht seitlich in einen Lichteinkoppelbereich des Gestaltungselements, welches als Lichtleitkörper wirkt, einkoppeln.

### Beschreibung der Erfindung

Die Erfindung wird nachfolgend beispielhaft unter Bezugnahme auf die beigefügten Zeichnungen beschrieben.

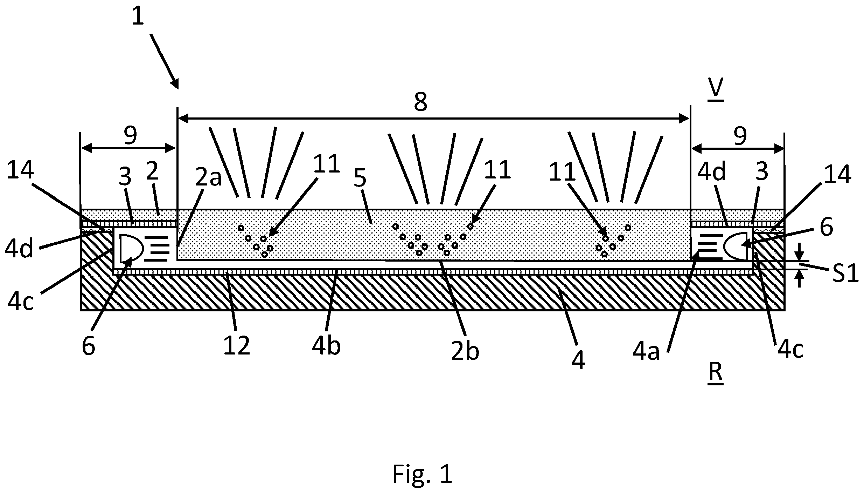

- Fig. 1: zeigt ein Schnittbild eines Aufbaus eines Beleuchtungssystems in einer ersten Ausführungsform.

Das erfindungsgemäße Beleuchtungssystem für ein Außenverkleidungsteil eines Kraftfahrzeugs wird nachfolgend anhand eines Beleuchtungssystems eines Frontpanels als Außenverkleidung im Frontbereich eines Elektrofahrzeugs beschrieben. Es ist selbstverständlich, dass ein derartiges Außenverkleidungsteil auch an beliebiger anderer Stelle eines Kraftfahrzeugs als Verkleidungselement eingesetzt werden kann. Das Außenverkleidungsteil ist bevorzugt auch eine Stoßfängerverkleidung, eine Heckklappenverkleidung, eine Türverkleidung, eine Dachverkleidung oder ein Spoiler oder ist ein Bauteil eines der vorgenannten Teile.

Das Beleuchtungssystem der Außenverkleidung ist in den Zeichnungen in einer schematischen Schnittdarstellung gezeigt und weist eine Vorderseite (V) und eine Rückseite (R) auf. Die Vorderseite V ist die Sichtseite der Außenhaut des Kraftfahrzeugs in der bestimmungsgemäßen Einbausituation am Kraftfahrzeug und für einen Nutzer sichtbar.

Das Beleuchtungssystem 1 weist im Wesentlichen einen Gestaltungsbereich 2, ein Gehäuseelement 4, sowie zumindest eine Lichtquelle 6 auf.

In der in der Figur 1 gezeigten Ausführungsform ist der Gestaltungsbereich 2 als Abdeckelement 5 ausgeführt, welches ein transparentes oder transluzentes Lichtfenster 8 und zumindest einen nichtlichtdurchlässigen Abschnitt 9 mit einer farbgebenden Beschichtung aufweist oder farbgebend ausgeführt ist.

Das Abdeckelement 5 ist als Kunststoffverbundbauteil ausgebildet und umfasst einen tiefgezogenen dreidimensional ausgebildeten Dekorträger 3 und zumindest eine außenseitig angeordnete transparente Abdeckschicht. Der Dekorträger 3 ist eine Kunststofffolie, insbesondere eine transparente Kunststofffolie, die eine farbige Beschichtung/Lackierung aufweist. Die Lackierung entspricht hinsichtlich der Farbgestaltung der Lackierung des Kraftfahrzeugs. Die Lackierung oder Beschichtung ist in dem Bereich, der ein Lichtfenster 8 bildet, nicht vorgesehen.

Alternativ kann der Dekorträger 3 eine farbige Lackfolie sein, wobei der lichtdurchlässige Bereich als Ausstanzung des Dekorträgers 3 hergestellt ist.

Die Folie als Dekorträger 3 ist in einem Spritzgießverfahren mit einem transparenten Polymermaterial hinterspritzt. In der in der Figur 1 gezeigten Ausführungsform ist das transparente Polymermaterial ein Polymethylmethacrylat (PMMA). In dem Bereich des lichtdurchlässigen Bereichs des Dekorträgers 3 ist in dem Abdeckelement dementsprechend das Lichtfenster 8 ausgebildet. Die transparente Abdeckschicht bildet die Vorderseite des Abdeckelements und die Außenseite des Beleuchtungssystems.

Wie es aus der Figur 1 zu dem ersten Ausführungsbeispiel zu erkennen ist, ist an dem Abdeckelement im Bereich des transparenten Lichtfensters 8 ein Gestaltungsbereich 2 ausgebildet, der ebenfalls beim Spritzgießverfahren angeformt ausgeführt ist. Das oben genannte verwendete Material ist ein synthetischer, glasähnlicher thermoplastischer Kunststoff, der warm verformbar ist. Dieser Kunststoff ist ideal für das Laserschneiden und Gravieren mit CO2-Lasern geeignet.

Der Gestaltungsbereich 2 umfasst Seitenwände 2a und eine rückseitige Fläche 2b. Die rückseitige Fläche 2b ist mithilfe eines Lasers behandelt. Bei der Lasergravur von Acryl / PMMA /PC wird die Oberfläche mit Hilfe des Lasers zu einer Außengravur abgetragen. So können auch feinste Details per Lasergravur auf Acryl präzise dargestellt werden. Das Ergebnis auf durchsichtigem Acryl ist eine mattweiße Gravur, die zur Darstellung eines charakteristischen Merkmals des Fahrzeugherstellers und/oder dekorative und/oder informative Elemente wie zumindest einem Symbol, einem Zeichen, einem Bild, einem Markensymbol, beispielsweise eines Logos, dienen kann.

In einer weiteren Ausbildung ist der Gestaltungsbereich 2 im Bereich des Lichtfensters 8 im Inneren mit lokalen Strukturen 11 ausgebildet. Diese lokalen Strukturen 11, die in der Figur 1 mit kleinen Kreisen dargestellt sind, dienen der Darstellung eines charakteristischen Merkmals des Fahrzeugherstellers und/oder dekorative und/oder informative Elemente wie zumindest einem Symbol, einem Zeichen, einem Bild, einem Markensymbol, beispielsweise eines Logos, wenn der als Lichtleitkörper ausgebildete Gestaltungsbereich beleuchtet ist. Die lokalen Strukturen 11 im Inneren werden ebenfalls durch Materialveränderung mittels Laser erzeugt.

Die lokalen Strukturen bzw. Gravur 11 mittels Laser erzeugt eine dreidimensionale Struktur, die aber die Vorderseite und glatte Außenhaut der Abdeckung im Bereich des Lichtfensters 8 nicht verändert. Dadurch bleibt die Struktur vor Verschleiß geschützt und die Oberfläche auf der Vorderseite glatt und unbearbeitet. Der Begriff unbearbeitet bedeutet in diesem Zusammenhang nur, dass die Oberfläche auf der Vorderseite des Abdeckelements nicht von einem Laser strukturiert wird. Die Oberfläche bleibt glatt und folgt lediglich einer vorgegebenen Kontur, wenn erforderlich.

Das Beleuchtungssystem 1 umfasst des Weiteren ein Gehäuseelement 4, welches eine muldenförmige Vertiefung 4a mit einer Bodenfläche 4b sowie Seitenwänden 4c aufweist. Die Bodenfläche 4b sowie die Seitenwände 4c begrenzen die Vertiefung, die nach oben hin offen ist. Des Weiteren weist die Bodenfläche 4b zur Vorderseite gerichtete Stirnflächen 4d auf.

Das Gehäuseelement 4 ist zumindest im Bereich der Bodenfläche mit einer farbgebenden Beschichtung 12 ausgeführt. Die farbgebende Beschichtung 12 entspricht hinsichtlich der Farbe der farbgebenden Beschichtung 12 des Abdeckelements und ist vorzugsweise die Wagenfarbe des Kraftfahrzeugs (Farbcode der farbgebenden Beschichtungen ist gleich Farbcode des Autolacks). Das Gehäuseelement ist aus einem thermoplastischen Kunststoffmaterial wie einem Polycarbonat (PC) oder Acrylnitril-Butadien-Styrol (ABS) hergestellt. Die farbige Beschichtung wird in üblichen Verfahren wie einem Lackierverfahren oder einem Folienkaschierverfahren hergestellt.

Wie es aus der Schnittdarstellung zu erkennen ist, liegt das Abdeckelement 5 derart auf dem Gehäuseelement 4 auf, dass der Gestaltungsbereich 2 mit seiner Erstreckung in der Höhe vollständig in die muldenförmige Vertiefung 4a ragt und von allen Seitenwänden 4c des Gehäuseelements 4 umgeben ist. Das Abdeckelement 5 ist auf den Stirnseiten 4d des Gehäuseelements 4 über eine Klebeverbindung 14 wie ein Klebeband fixiert gehalten.

Zwischen rückseitiger Fläche 2b des Gestaltungsbereichs 2 und Bodenfläche 4b des Gehäuseelements verbleibt dabei ein Luftspalt S1.

Zwischen zwei Seitenwänden 2a des Gestaltungsbereichs und den jeweils korrespondierend gegenüberliegenden Seitenwänden 4c des Gehäuseelements 4 verbleibt ebenfalls ein Einbauraum.

Um die obenstehend beschriebenen lokalen Strukturen 11 des Gestaltungsbereichs von der Außenseite sichtbar zu machen, ist eine Beleuchtung vorgesehen. Wie es aus der Figur 1 zu erkennen ist, ist in jedem Einbauraum zumindest ein Leuchtmittel 6 angeordnet. Die Leuchtmittel 6 sind dabei derart ausgerichtet angeordnet, dass das ausgestrahlte Licht in die Seitenwände 2a bzw. in Einkoppelflächen der Seitenwände des Gestaltungsbereichs 2 der als Lichtleitkörper dient eingekoppelt wird. Das derart in den Gestaltungsbereich 2 eingekoppelte Licht wird im weiteren Verlauf an der vorher bearbeiteten strukturierten rückseitigen Fläche 2b ausgekoppelt und umgelenkt und durch den Gestaltungsbereich 2 und das Lichtfenster 8 zur Außenseite hin ausstrahlt, wodurch das charakteristische Merkmal auf der Außenseite im Bereich des Lichtfensters 8 sichtbar ist. Die Lichtstrahlen sind durch die Striche symbolisiert dargestellt.

Das charakteristische Merkmal kann auch beleuchtete Symbole, Buchstaben, Schriftzeichen, Markenembleme umfassen, die in dem zweiten Zustand von der Außenseite in Erscheinung treten und sichtbar sind.

Wie es weiterhin aus der schematischen Darstellung der Figur 1 zu erkennen ist, sind die Leuchtmittel 6 in den seitlich dargestellten Einbauräumen von der Außenseite gesehen von der farbgebenden Beschichtung des Abdeckelements 5 verdeckt angeordnet. Des Weiteren ist das Beleuchtungssystem 1 derart dimensioniert und ausgeführt, dass die Bodenfläche 4b des Gehäuseelements 4 über die gesamte Breite mit der gleichen farbgebenden Beschichtung versehen ist und das Lichtfenster 8 und zumindest einen Teilbereich des nichtlichtdurchlässigen Abschnitts des Gestaltungsbereichs 2 von der Rückseite gesehen komplett abdeckt. Durch diese Ausführung ist in dem ersten Zustand von der Außenseite gesehen ein einheitliches durchgängiges Erscheinungsbild, vorzugsweise in der Wagenfarbe zu erkennen. Dies wird auch als "secret until lit" Funktion bezeichnet. In dem zweiten Zustand ist auf der Sichtseite ein dreidimensional erscheinendes charakteristischen Merkmal des Fahrzeugherstellers und/oder dekorative und/oder informative Elemente wie zumindest einem Symbol, einem Zeichen, einem Bild, einem Markensymbol hinterleuchtet und als Hintergrund weiterhin die farbgebende Beschichtung wahrnehmbar.

### Bezugszeichenliste

- 1: Beleuchtungssystem
- 2: Gestaltungsbereich
- 2a: Seitenwände
- 2b: rückseitige Fläche
- 3: Dekorträger
- 4: Gehäuseelement
- 4a: Vertiefung
- 4b: Bodenfläche
- 4c: Seitenwände
- 4d: Stirnflächen
- 5: Abdeckelement
- 6: Lichtquelle
- 8: Lichtfenster
- 9: nichtlichtdurchlässiger Fensterabschnitt
- 11: Gravur
- 12: Beschichtung
- 14: Klebeverbindung

## Patentansprüche

1. Beleuchtungssystem (1) für ein Außenverkleidungsteil eines Kraftfahrzeugs, mit zumindest
• einem Gestaltungsbereich (2), der eine zur Außenseite weisende Sichtseite und eine Rückseite mit einer rückseitigen Fläche (2b) sowie Seitenflächen (2a) aufweist, wobei der Gestaltungsbereich (2) als Lichtleitkörper aus einem transparenten thermoplastischen Material welches für eine Lasergravur geeignet ist, vorzugsweise einem PMMA besteht, wobei der Gestaltungsbereich (2) ein Lichtfenster (8) bildet und für eine individuelle Anpassung des Fahrzeugs und/oder zur Darstellung eines auf der Sichtseite dreidimensional erscheinendes charakteristischen Merkmals mittels einer Laserstruktur auf der rückseitigen Fläche (2b) oder mittels lokaler Strukturen (11) im Inneren des Gestaltungsbereichs (2) bearbeitet ist,
• einem Gehäuseelement (4), welches eine muldenförmige Ausnehmung (4a) mit einer Bodenfläche (4b) und Seitenflächen (4c) aufweist,
• wobei der Gestaltungsbereich (2) derart an dem Gehäuseelement (4) angebunden ist, dass der Gestaltungsbereich (2) zumindest mit einem rückseitigen Abschnitt von der Ausnehmung (4a) umgeben ist und zwischen rückseitiger Fläche (2b) des Gestaltungsbereichs (2) und Bodenfläche (4b) ein Luftspalt verbleibt, und dass zwischen zumindest einer Seitenfläche (2a) des Gestaltungsbereichs (2) und Seitenfläche (4c) des Gehäuseelements (2) ein Einbauraum verbleibt,
• wobei in dem zumindest einen Einbauraum zumindest eine Lichtquelle (6) angeordnet ist, wobei das Licht in zumindest eine Seitenfläche (2a) des Gestaltungsbereichs (2) einkoppelbar ist, und im weiteren Strahlengang an der Laserstruktur bzw. an den lokalen Strukturen (11) auskoppelbar und anschließend den Gestaltungsbereich (2) auf der Außenseite zur Erzeugung des dreidimensionalen charakteristischen Merkmals durchstrahlt,
• wobei die zumindest eine Lichtquelle (6) in dem Einbauraum durch eine erste farbgebende Beschichtung (3) abgedeckt ist, **dadurch gekennzeichnet,**
• **dass** die Bodenfläche (4b) des Gehäuseelements (4) mit einer zweiten farbgebenden Beschichtung (12) versehen ist,
• und **dass** der Gestaltungsbereich (2) als Abdeckelement (5) ausgeführt ist, welches den Gestaltungsbereich (2) in Form des zumindest eines Lichtfensters (8) und zumindest einen nichtlichtdurchlässigen Abschnitt mit der ersten farbgebenden Beschichtung aufweist, wobei dieser nichtlichtdurchlässige Abschnitt die Lichtquelle (6) im Einbauraum von der Sichtseite verdeckt,
• und **dass** die erste farbgebende Beschichtung des Abdeckelements (5) und die zweite farbgebende Beschichtung (12) der Bodenfläche (4b) des Gehäuseelements (4) mit der gleichen Farbe, vorzugsweise der Wagenfarbe ausgeführt sind.

2. Beleuchtungssystem (1) nach Anspruch 1, **dadurch gekennzeichnet, dass** die erste und/oder die zweite farbgebende Beschichtung eine farbige lichtdurchlässige Folie oder eine Lackierung ist.

3. Beleuchtungssystem (1) nach einem der vorangehenden Ansprüche, **dadurch gekennzeichnet, dass** die zumindest eine Lichtquelle (6) eine oder mehrere LEDs oder ein Lichtband ist.

4. Außenverkleidungsteil mit einem Beleuchtungssystem (1) nach einem der vorangehenden Ansprüche, **dadurch gekennzeichnet, dass** das Gehäuseelement (4) an das Außenverkleidungselement angebunden oder einteilig mit dem Außenverkleidungselement ausgeführt ist.

## Claims

1. Lighting system (1) for an exterior trim part of a motor vehicle, having at least
• a configuration region (2), which has a visible side facing towards the outer side and a rear side with a rear-side face (2b) as well as side faces (2a), the configuration region (2) in the form of a light-guide body consisting of a transparent thermoplastic material which is suitable for laser engraving, preferably a PMMA, the configuration region (2) forming a light window (8) and being processed by means of a laser structure on the rear-side face (2b) or by means of local structures (11) inside the configuration region (2) for individual adaptation of the vehicle and/or for representation of a characteristic feature appearing three-dimensionally on the visible side,
• a housing element (4) which has a trough-shaped recess (4a) with a bottom face (4b) and side faces (4c),
• wherein the configuration region (2) is attached to the housing element (4) in such a way that the configuration region (2) is enclosed at least by a rear-side section of the recess (4a) and an air gap remains between the rear-side face (2b) of the configuration region (2) and the bottom face (4b), and that an installation space remains between at least one side face (2a) of the configuration region (2) and one side face (4c) of the housing element (2),
• wherein at least one light source (6) is arranged in the at least one installation space, the light being couplable into at least one side face (2a) of the configuration region (2) and being outcouplable in the further beam path at the laser structure or at the local structures (11) and subsequently being radiated through the configuration region (2) on the outer side in order to generate the three-dimensional characteristic feature,
• wherein the at least one light source (6) in the installation space is covered by a colouring coating (3), **characterized**
• **in that** the bottom face (4b) of the housing element (4) is provided with a second colouring coating (12),
• and **in that** the configuration region (2) is in the form of a cover element (5) which has the configuration region (2) in the form of the at least one light window (8) and at least one opaque section with the first colouring coating, wherein this opaque section covers the light source (6) in the installation space from the visible side,
• and **in that** the first colouring coating of the cover element (5) and the second colouring coating (12) of the bottom face (4b) of the housing element (4) are designed with the same colour, preferably the car colour.

2. Lighting system (1) according to Claim 1, **characterized in that** the first and/or the second colouring coating is a coloured light-transmitting film or a paint finish.

3. Lighting system (1) according to either of the preceding claims, **characterized in that** the at least one light source (6) is one or more LEDs or a light strip.

4. Exterior trim part comprising a lighting system (1) according to one of the preceding claims, **characterized in that** the housing element (4) is attached to the exterior trim part or is formed integrally with the exterior trim part.

## Revendications

1. Système d'éclairage (1) pour un élément d'habillage extérieur d'un véhicule automobile, comprenant au moins
• une zone de configuration (2) qui présente une face d'aspect tournée vers la face extérieure et une face arrière pourvue d'une surface arrière (2b) ainsi que de surfaces latérales (2a), dans lequel la zone de configuration (2) en tant que corps de guidage de lumière est composée d'un matériau thermoplastique transparent qui est adapté à une gravure au laser, de préférence d'un PMMA, dans lequel la zone de configuration (2) constitue une fenêtre de lumière (8) et est traitée pour une adaptation individuelle du véhicule et/ou pour la représentation d'une particularité caractéristique apparaissant en trois dimensions sur la face d'aspect, au moyen d'une structure laser sur la surface arrière (2b) ou au moyen de structures locales (11) à l'intérieur de la zone de configuration (2),
• un élément de boîtier (4) qui présente un évidement en forme de creux (4a) pourvu d'une surface inférieure (4b) et de surfaces latérales (4c),
• dans lequel la zone de configuration (2) est rattachée à l'élément de boîtier (4) de telle sorte que la zone de configuration (2) est entourée de l'évidement (4a) par au moins une partie arrière, et qu'il reste un entrefer entre la surface arrière (2b) de la zone de configuration (2) et la surface inférieure (4b), et qu'il reste un espace d'installation entre au moins une surface latérale (2a) de la zone de configuration (2) et la surface latérale (4c) de l'élément de boîtier (2),
• dans lequel au moins une source de lumière (6) est disposée dans ledit au moins un espace d'installation, dans lequel la lumière peut être injectée dans au moins une surface latérale (2a) de la zone de configuration (2), et sur la suite de la trajectoire des rayons peut être déclenchée au niveau de la structure laser ou des structures locales (11), et transillumine ensuite la zone de configuration (2) sur la face extérieure pour générer la particularité caractéristique tridimensionnelle,
• dans lequel ladite au moins une source de lumière (6) dans l'espace d'installation est recouverte d'un premier revêtement colorant (3),
**caractérisé**
• **en ce que** la surface inférieure (4b) de l'élément de boîtier (4) est pourvue d'un deuxième revêtement colorant (12) ;
• et **en ce que** la zone de configuration (2) est réalisée sous forme d'élément de recouvrement (5) qui présente la zone de configuration (2) sous la forme de ladite au moins une fenêtre de lumière (8) et d'au moins une partie non transparente pourvue du premier revêtement colorant, dans lequel cette partie non transparente recouvre la source de lumière (6) dans l'espace d'installation depuis la face d'aspect,
• et **en ce que** le premier revêtement colorant de l'élément de recouvrement (5) et le deuxième revêtement colorant (12) de la surface inférieure (4b) de l'élément de boîtier (4) sont réalisés de la même couleur, de préférence de la couleur de la voiture.

2. Système d'éclairage (1) selon la revendication 1, **caractérisé en ce que** le premier et/ou le deuxième revêtement colorant est un film transparent de couleur ou une peinture.

3. Système d'éclairage (1) selon l'une quelconque des revendications précédentes, **caractérisé en ce que** ladite au moins une source de lumière (6) correspond à une ou plusieurs LED ou à une bande lumineuse.

4. Elément d'habillage extérieur comprenant un système d'éclairage (1) selon l'une quelconque des revendications précédentes, **caractérisé en ce que** l'élément de boîtier (4) est rattaché à l'élément d'habillage extérieur ou est réalisé d'un seul tenant avec l'élément d'habillage extérieur.
